# EUROPÄISCHE PATENTSCHRIFT

(11) **EP 2 318 239 B1**
(45) Veröffentlichungstag und Bekanntmachung des Hinweises auf die Patenterteilung: **07.12.2011**
(21) Anmeldenummer: 09777785.8
(22) Anmeldetag: 10.08.2009
(51) Int. Cl.: B60R 21/09, B62D 1/184

(54) **VERSTELLBARE LENKSÄULE FÜR EIN KRAFTFAHZEUG**
ADJUSTABLE STEERING COLUMN FOR A MOTOR VEHICLE
COLONNE DE DIRECTION RÉGLABLE POUR VÉHICULE À MOTEUR

(30) Priorität: 01.09.2008 DE 102008045143
(43) Veröffentlichungstag der Anmeldung: 11.05.2011
(73) Patentinhaber: ThyssenKrupp Presta Aktiengesellschaft, 9492 Eschen (LI)
(72) Erfinder: DIETZ, Maximilian, CH-9400 Rorschach (CH); RÜTZEL, Tillmann, 78462 Konstanz (DE)
(74) Vertreter: Hofmann, Ralf U.
(86) Internationale Anmeldenummer: PCT/EP2009/005793
(87) Internationale Veröffentlichungsnummer: WO 2010/022855

(56) Entgegenhaltungen:
- EP-A- 1 747 966
- WO-A-2004/069629
- DE-A1- 10 141 551

## Beschreibung

Die Erfindung bezieht sich auf eine verstellbare Lenksäule für ein Kraftfahrzeug mit einer Spannvorrichtung, in deren geöffnetem Zustand die Lenksäule verstellbar ist und in deren geschlossenem Zustand die eingestellte Position der Lenksäule fixiert ist, wobei die Spannvorrichtung einen Betätigungshebel und ein Spannstück umfasst, welches zum Öffnen und Schließen der Spannvorrichtung vom Betätigungshebel um eine Drehachse drehbar ist.

Verstellbare Lenksäulen sind in vielen unterschiedlichen Ausführungsformen bekannt. Zur Feststellung der Verstellung im geschlossenen Zustand der Spannvorrichtung können beispielsweise durch die Spannvorrichtung miteinander verspannte Reibflächen zur kraftschlüssigen Feststellung oder durch die Spannvorrichtung zusammengeführte Verzahnungen zur formschlüssigen Feststellung vorgesehen sein. Die Verstellbarkeit kann sich auf die axiale Richtung der Lenksäule und/oder die Neigungsverstellung bzw. Höhenrichtung beziehen.

Um für den Fall eines Fahrzeugcrashes den Schutz des Fahrzeugführers zu verbessern, insbesondere gegenüber einem Aufprall des Knies auf den Betätigungshebel der Feststelleinrichtung, wurde in der WO 03/018 384 A1 bereits vorgeschlagen, den Betätigungshebel als Deformationselement auszubilden, sodass er durch einen Aufprall unter Energieaufnahme deformierbar ist. Zu diesem Zweck ist er vorzugsweise mit einer Sollknickstelle versehen. Die zur Deformation des Betätigungshebels führende Kraft muss hierbei ausreichend hoch gewählt werden, um eine Deformation im Normalbetrieb auszuschließen. Weiters muss der Betätigungshebel mit einer entsprechenden Geometrie ausgebildet werden, damit es durch eine im Crashfall in Richtung zur Fahrzeugfront wirkende Aufprallkraft zu einer Deformation des Betätigungshebels kommt.

Aus der DE 10 141 551 A1 ist weiters eine verstellbare Lenksäule gemäß dem Oberbegriff des Anspruchs 1 bekannt, bei der ein Hebelteil des Betätigungshebels mit einem Lagerteil über einen Abreißmechanismus verbunden ist, durch welchen sich das Hebelteil im Crashfall vom Lagerteil lösen kann. Die in dieser Schrift gezeigte Ausbildung ist relativ aufwendig. Es muss auch vermieden werden, dass sich das Hebelteil des Betätigungshebels ungewollt vom Lagerteil löst, beispielsweise bei durch ein versehentliches Anstoßen oder missbräuchlich aufgebrachten Kräften, auch in Querrichtung.

Die US 7 125 046 B2 zeigt eine verstellbare Lenksäule, bei der sich im Crashfall das Mantelrohr in Richtung zur Fahrzeugfront verschieben kann. Hierbei wird auch der Betätigungshebel für den Klemmmechanismus in Richtung zur Frontseite des Fahrzeugs bewegt, wodurch der Knieschutz des Fahrers verbessert werden soll.

Aufgabe der Erfindung ist es, eine verstellbare Lenksäule der eingangs genannten Art bereit zu stellen, bei der bei einer vorteilhaften Ausbildung ein effektiver Schutz des Fahrers gegenüber einem Aufprall auf den Betätigungshebel im Crashfall erreicht wird. Erfindungsgemäß gelingt dies durch eine Lenksäule mit den Merkmalen des Patentanspruchs 1. Aus den abhängigen Ansprüchen gehen vorteilhafte Weiterbildungen der Erfindung hervor.

Bei der Lenksäule der Erfindung ist der Betätigungshebel derart mit dem Spannstück der Spannvorrichtung verbunden, dass er bei Überschreiten eines Grenzwertes eines zwischen dem Betätigungshebel und dem Spannstück wirkenden Drehmoments gegenüber dem Spannstück, zumindest in eine Drehrichtung, verdrehbar ist. Unterhalb dieses Grenzwerts des Drehmoments liegt günstigerweise eine drehfeste Verbindung zwischen dem Betätigungshebel und dem Spannstück vor. Der Betätigungshebel kann hierbei unmittelbar oder mittelbar, d.h. über ein oder mehrere Übertragungsglieder, drehfest mit dem Spannstück verbunden sein. Diese Verbindung ist aber nur bis zu einem gewissen, zwischen dem Betätigungshebel und dem Spannstück wirkenden Drehmoment drehfest. Wenn dieser Grenzwert überschritten wird, insbesondere im Falle eines Fahrzeugcrashs, wenn der Fahrer beispielsweise mit dem Knie auf den Betätigungshebel aufprallt, kann sich der Betätigungshebel gegenüber dem Spannstück unter Lösen bzw. Nachgeben der drehfesten Verbindung zumindest begrenzt verdrehen. Nach Überschreiten dieses Grenzwertes des einwirkenden Drehmoments besteht hierbei günstigerweise eine Bewegungsmöglichkeit des Betätigungshebels nur in einem Freiheitsgrad, eben im Sinne einer Drehung gegenüber dem Spannstück.

Die Erfindung ermöglicht eine einfache und kompakte Ausbildung. Vorteilhafterweise kann bei der erfindungsgemäßen Ausbildung eine relativ hohe Unempfindlichkeit gegen versehentliche oder missbräuchliche Krafteinwirkungen auf den Betätigungshebel, insbesondere auch in Querrichtung, d.h. in Richtung der Drehachse, erreicht werden.

Vorzugsweise beträgt der Grenzwert des Drehmoments, oberhalb von dem der Betätigungshebel gegenüber dem Spannstück verdrehbar ist, mindestens 7,5 Nm, wobei ein Wert von mindestens 12 Nm mehr bevorzugt ist. Um genügende Sicherheit auch im Missbrauchsfall zu erhalten, sind Grenzwerte des Drehmoments, oberhalb von dem der Betätigungshebel gegenüber dem Spannstück verdrehbar ist, von mindestens 15 Nm besonders zu bevorzugen.

Je nach Lage und Ausrichtung des Stellhebels muss der Grenzwert derart ausgelegt sein, dass auch Missbrauchskräfte bzw. ein unbeabsichtigtes Abstützen des Fahrers auf dem Hebel nicht zu einem Auftrennen der drehfesten Verbindung führen. Das stellt aber kein Hindernis dar, da im Crashfall der Fahrer durch seine Relativgeschwindigkeit zum Fahrzeug eine erhöhte Kraft und damit ein entsprechendes Moment einbringt.

In einer bevorzugten Ausführungsform der Erfindung liegt zumindest solange, als der Grenzwert des auf den Betätigungshebel einwirkenden Drehmoments nicht überschritten worden ist, eine zumindest in eine Drehrichtung um die Drehachse wirksame formschlüssige Verbindung zwischen dem Betätigungshebel und dem Spannstück vor. Vorzugsweise ist diese formschlüssige Verbindung in beide Drehrichtungen um die Drehachse wirksam. Diese formschlüssige Verbindung kann unmittelbar zwischen dem Betätigungshebel und dem Spannstück oder mittelbar über ein oder mehrere Zwischenglieder, die jeweils bezogen auf die zumindest eine Drehrichtung, vorzugsweise auf beide Drehrichtungen, jeweils formschlüssig miteinander verbunden sind, ausgebildet sein. Bei Überschreiten des Grenzwerts gibt die formschlüssige Verbindung nach bzw. wird gelöst. Dieses Lösen bzw. Nachgeben kann durch Abbrechen und/oder Verformen zumindest eines der den Formschluss bewirkenden Teile erfolgen. Es kann sich hierbei um ein Teil des Betätigungshebels und/oder des Spannstückes und/oder um mindestens ein Zwischenteil handeln, welches den Formschluss vermittelt, beispielsweise einen abscherbaren Verbindungsbolzen. Falls die Verbindung durch eine Verformung nachgibt bzw. gelöst wird, so ist diese Verformung vorzugsweise plastisch oder zumindest überwiegend plastisch. Bei der Verformung kann es sich beispielsweise um eine Aufweitung handeln.

Denkbar und möglich, obwohl weniger bevorzugt, wäre auch eine kraftschlüssige, insbesondere reibschlüssige, Verbindung zwischen dem Betätigungshebel und dem Spannstück, welche den Betätigungshebel gegenüber dem Spannstück bei unterhalb des Grenzwertes einwirkenden Drehmomenten unverdrehbar hält. Eine definierte Ausbildung eines über die Lebensdauer im Wesentlichen konstanten Grenzwerts ist hier aber schwieriger.

Vorteilhafterweise ist der Betätigungshebel derart angeordnet, dass ein Drehmoment, welches vom Fahrer, z. B. seinem Knie, im Falle eines Fahrzeugcrashs, wenn der Fahrer Richtung Fahrzeugfront geschleudert wird, auf den Betätigungshebel aufgebracht wird, in die Schließdrehrichtung des Betätigungshebels wirkt, das ist die Drehrichtung, in welche der Betätigungshebel beim Schließen der Spannvorrichtung um die Drehachse verschwenkt wird.

In einer vorteilhaften Ausführungsform der Erfindung erfolgt die Verdrehung des Betätigungshebels gegenüber dem Spannstück, wenn ein oberhalb des Grenzwerts liegendes Drehmoment einwirkt, zumindest über einen Winkelbereich unter Energieabsorption (also nicht als plötzliches vollständiges Lösen), wobei dieser Winkelbereich vorzugsweise mehr als 10° beträgt. Die Sicherheit gegen versehentliche oder missbräuchliche Krafteinwirkungen kann dadurch erhöht werden.

Die verstellbare Lenksäule gemäß der Erfindung kann in herkömmlicher Weise eine Trageinheit, die mit dem Chassis des Kraftfahrzeugs verbindbar ist, und eine die Lenkspindel drehbar lagernde Stelleinheit umfassen, welche im geöffneten Zustand der Spannvorrichtung gegenüber der Trageinheit zur Einstellung der Position der Lenksäule verstellbar ist und im geschlossenen Zustand der Spannvorrichtung in ihrer eingestellten Position gegenüber der Trageinheit festgestellt ist. Diese Stelleinheit kann insbesondere von einem die Lenkspindel drehbar lagernden Mantelrohr gebildet werden oder ein solches aufweisen.

Wenn sich bei Überschreiten des Grenzwertes des zwischen dem Betätigungshebel und dem Spannstück wirkenden Drehmoments der Betätigungshebel gegenüber dem Spannstück verdreht, so bleibt vorzugsweise die Spannvorrichtung geschlossen. Das Spannstück verdreht sich also nicht, wobei es gegen eine Verdrehung durch einen entsprechenden Anschlag abgestützt ist. Wenn entsprechend die Spannvorrichtung dabei gespannt bleibt, kann die Lenksäule entsprechend der Auslegung der Spannvorrichtung Kräfte gegenüber ihren Verstellrichtungen aufnehmen. Insbesondere können diese Kräfte derart hoch ausgelegt sein, dass die Lenksäule im Crashfall durch einen Aufprall des Fahrers nicht gegenüber der Trageinheit verschoben wird und beispielsweise die Funktion des Airbags voll gewährleistet ist. Auf diese Weise wird einerseits die Gefährdung durch den Betätigungshebel verringert und andererseits kann die Energie beim Aufprall des Fahrers auf die Lenksäule, wie im Stand der Technik bekannt, durch Absorptionselemente zwischen Trageinheit und karosseriefester Halterung kontrolliert absorbiert werden.

Im geöffneten Zustand der Spannvorrichtung kann die Lenksäule in ihre Längsrichtung und/oder in ihrer Neigung bzw. in der Höhe verstellbar sein.

Wenn das zwischen dem Betätigungshebel und dem Spannstück wirkende Drehmoment den Grenzwert überschreitet, so wird dies als "Crashfall" bezeichnet. Solange dieser Grenzwert nicht überschritten worden ist, liegt der "Normalbetrieb" der Lenksäule vor.

Weitere Vorteile und Einzelheiten der Erfindung werden im Folgenden anhand der beiliegenden Zeichnung erläutert. In dieser zeigen:
Fig.1 eine Schrägsicht einer möglichen Ausbildungsform einer Lenksäule gem. der Erfindung, Teile der Spannvorrichtung nach Art einer Explosionsdarstellung auseinandergezogen dargestellt;
Fig. 2 eine Ansicht des Betätigungshebels mit dem Spannstück und dem Spannbolzen;
Fig. 3 eine Schrägsicht dieser Teile;
Fig. 4 eine Seitenansicht des Betätigungshebels mit dem Spannstück, dem Gegenspannstück und dem Spannbolzen im geöffneten Zustand der Spannvorrichtung, der Betätigungshebel und der Spannbolzen teilweise abgeschnitten;
Fig. 5 eine Ansicht entsprechend Fig. 4 im teilweise geschlossenen Zustand der Spannvorrichtung;
Fig. 6 eine Ansicht entsprechend Fig. 4 im geschlossenen Zustand der Spannvorrichtung;
Fig. 7 eine Schrägsicht des Betätigungshebels und des Spannstücks im auseinandergezogenen Zustand dieser Teile;
Fig. 8 eine Schrägsicht der Teile von Fig. 7 aus einer anderen Blickrichtung;
Fig. 9 einen Schnitt entlang der Linie AA von Fig. 7 (wobei die beiden Komponenten allerdings zusammen montiert sind);
Fig. 10 einen Schnitt entlang der Linie BB von Fig. 9;
Fig. 11 einen Schnitt entsprechend Fig. 10 nach einem Fahrzeugcrash gem. einer ersten Ausführungsvariante;
Fig. 12 einen Schnitt entsprechend Fig. 10 nach einem Fahrzeugcrash entsprechend einer zweiten Ausführungsvariante;
Fig. 13 und 14 Schnitte entsprechend Fig. 10 vor und nach einem Fahrzeugcrash entsprechend einer weiteren Ausführungsform der Erfindung, mit einem modifiziert ausgebildeten Betätigungshebel;
Fig. 15 eine weitere etwas modifizierte erfindungsgemäße Ausführungsform.

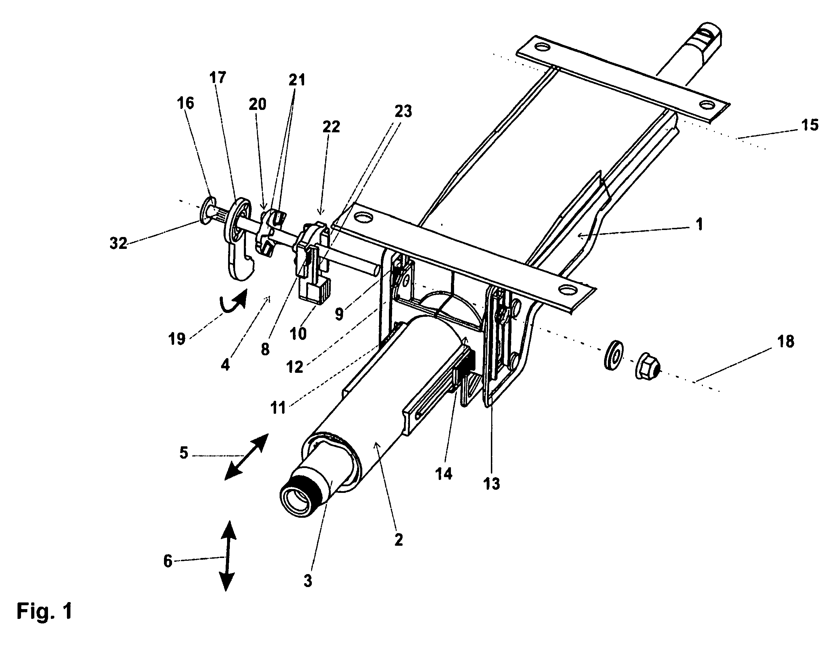

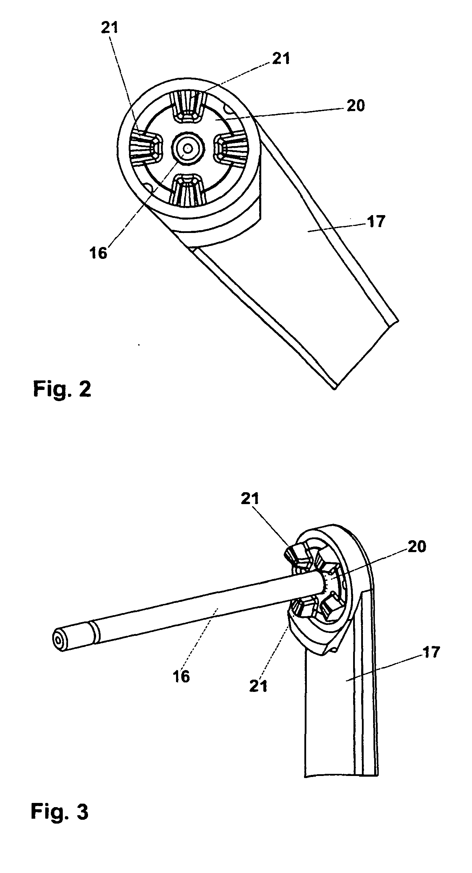

Ein erstes Ausführungsbeispiel der Erfindung wird im Folgenden anhand der Fig. 1 bis 11 erläutert. Die Lenksäule umfasst eine Trageinheit 1, die mit dem Chassis des Kraftfahrzeugs verbindbar ist, und eine Stelleinheit 2, die einen an das lenkradseitge Ende der Lenksäule anschließenden Abschnitt der Lenkspindel 3 drehbar lagert. Die Stelleinheit 2 ist in Form eines Mantelrohrs ausgebildet.

Im geöffneten Zustand einer Spannvorrichtung 4 ist die Stelleinheit 2 in Längsrichtung 5 der Lenksäule (=in Richtung der Längsachse der Lenkspindel 3) für eine Längenverstellung der Lenksäule und in die Stellrichtung 6 für eine Höhe- bzw. Neigungsverstellung der Lenksäule gegenüber der Trageinheit 1 verstellbar. Im geschlossenen Zustand der Spannvorrichtung 4 ist die eingestellte Position der Stelleinheit 2 gegenüber der Trageinheit 1 festgestellt. Zur Feststellung der Verstellung dienen beispielsweise, wie dargestellt, ineinandergreifende Verzahnungen 8-11. Stattdessen könnten zur Feststellung auch Reibflächen vorgesehen sein. Auch andere formschlüssig wirkende Feststellelemente sind bekannt und könnten eingesetzt werden. Weiters können zur Feststellung auch Kombinationen von formschlüssig und reibschlüssig wirkenden Elementen eingesetzt werden. Zur Erhöhung der Anzahl der Reibflächen können auch nach Art von Lamellenkupplungen zusammenwirkende Lamellen vorgesehen sein. Die Verzahnungen und/oder anderen Feststellelemente können ein- oder beidseitig bezüglich der Längsmittelachse vorgesehen sein (zur Verdeutlichung der beidseitigen Anordnung ist in Fig. 1 beidseitig an der Stelleinheit 2 eine Verzahnung dargestellt, während die anderen Verzahnungen aber der Einfachheit halber nur auf einer Seite dargestellt sind). Alle diese Ausbildungen sind bekannt.

Die Stelleinheit 2 ist zwischen Seitenwangen 12, 13 der Trageinheit 1 angeordnet. Im gezeigten Ausführungsbeispiel ist weiters zwischen der Trageinheit 1 und der Stelleinheit 2 eine Zwischeneinheit 14 angeordnet Die Zwischeneinheit 14 ist im geöffneten Zustand der Spannvorrichtung 4 gegenüber der Trageinheit 1 in die der Höhen- bzw. Neigungsverstellung entsprechende Stellrichtung 6 verstellbar. Hierzu ist sie um eine Schwenkachse 15, deren Ausbildung im gezeigten Ausführungsbeispiel nicht im Einzelnen dargestellt ist, gegenüber der Trageinheit 1 verschwenkbar. In die Längsrichtung 5 der lenksäule ist die Zwischeneinheit 14 gegenüber der Trageinheit 1 unverschiebbar. Im geöffneten Zustand der Spannvorrichtung 4 ist weiters die Stelleinheit 2 in Längsrichtung 5 gegenüber der Zwischeneinheit 14 zur Längeneinstellung der Lenksäule verstellbar. In die Stellrichtung 6 ist die Stelleinheit 2 gegenüber der Zwischeneinheit 14 unverstellbar.

Im geschlossenen Zustand der Spannrichtung 4 sind die Seitenwangen 12, 13 der Trageinheit 1 gegen die Zwischeneinheit 14 verspannt.

Es ist dabei möglich, die Verbindung der Trageinheit 1 mit dem Chassis des Kraftfahrzeuges und/oder die Verbindung der Zwischeneinheit 14 mit der Trageinheit 1 und/oder die Verbindung der Stelleinheit 2 mit der Zwischeneinheit 14 unter Zwischenschaltung bekannter Crashenergieabsorptionseinrichtungen darzustellen. Da die Energieabsorption der Lenksäule im Crashfall nicht Kern der Erfindung ist, sind derartige Mechanismen hier nicht weiter dargestellt. Der Fachmann kann aber aus den Techniken zur Energieabsorption nach eigenem Ermessen geeignete Mechanismen auswählen und mit der erfindungsgemäßen Lösung kombiniert in eine Lenksäule integrieren.

Die Ausbildung mit einer Trageinheit 1, Stelleinheit 2 und dazwischenliegenden Zwischeneinheit 14 in der beschriebenen Form ist bekannt. Eine solche Zwischeneinheit 14 könnte auch entfallen, wie dies ebenfalls bekannt ist. Im geschlossenen Zustand der Spannvorrichtung 4 werden die Seitenwangen 12, 13 dann direkt an die Stelleinheit 2 angedrückt.

Die Spannvorrichtung 4 umfasst einen quer zur Lenkspindel 3, insbesondere rechtwinklig zur Längsrichtung 5 der Lenksäule, verlaufenden Spannbolzen 16, der Öffnungen in den Seitenwangen 12, 13 durchsetzt. Zur Ermöglichung der Höhen- bzw. Neigungsverstellung sind die vom Spannbolzen 16 durchsetzten Öffnungen in den Seitenwangen 12, 13 als in die Stellrichtung 6 verlaufende Langlöcher ausgebildet. Der Spannbolzen 16 durchsetzt weiters Öffnungen in der Zwischeneinheit 14. Er könnte auch Öffnungen in der Stelleinheit 2 durchsetzen, insbesondere bei Ausbildungen, bei denen eine Zwischeneinheit 14 entfällt. Diese Öffnungen in der Stelleinheit 2 wären zur Ermöglichung einer Längsverstellung der Lenksäule als in die Längsrichtung 5 verlaufende Langlöcher ausgebildet.

Eine erfindungsgemäße Lenksäule könnte auch nur in die Längsrichtung 5 oder nur in die der Höhen- bzw. Neigungsverstellung entsprechende Stellrichtung 6 verstellbar sein.

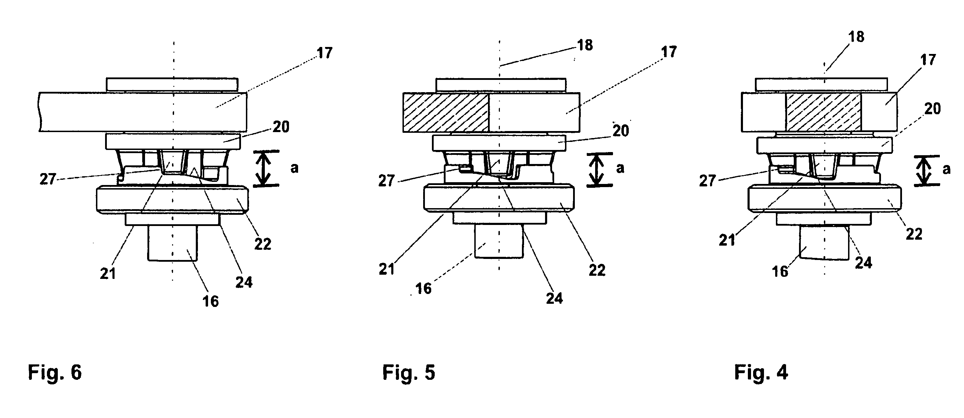

Zum Öffnen und Schließen der Spannvorrichtung 4 dient ein vom Benutzer betätigbarer Betätigungshebel 17. Zum Schließen der Spannvorrichtung 4 wird der Betätigungshebel 17, ausgehend von einer Offensteltung (Fig. 4) um die vom Spannbolzen 16 gebildete Drehachse 18 in eine Schließdrehrichtung 19 bis in eine Schließstellung (vgl. Fig. 6) verschwenkt. Bei seiner Verschwenkung um die Drehachse 18 von seiner Offen- in seine Schließstellung nimmt der Betätigungshebel 17 ein Spannstück 20 mit, welches im gezeigten Ausführungsbeispiel in Form einer Nockenscheibe mit mindestens einem Nocken 21, vorzugsweise mindestens zwei Nocken 21, ausgebildet ist. Bei der Drehung des Betätigungshebels 17 von seiner Offen- in seine Schließstellung wird das Spannstück 20 von einer Passivstellung (Fig. 4), in der die Spannvorrichtung geöffnet ist, in die Schließdrehrichtung 19 in eine Aktivstellung (Fig. 6), in der die Spannvorrichtung 4 geschlossen ist, um die Drehachse 18 gedreht.

Das Spannstück 20 wirkt mit einem Gegenspannstück 22 zusammen, welches um die Drehachse 18 unverdrehbar gehalten ist, im gezeigten Ausführungsbeispiel durch mit der Seitenwange 12 zusammenwirkenden Führungsleisten 23, die von der Seitenwange 12 (beispielsweise den Rändern der vom Spannbolzen 16 durchsetzten Öffnung, an denen sie anliegen) in die Stellrichtung 6 verschiebbar geführt sind. Das Gegenspannstück 22 ist im gezeigten Ausführungsbeispiel in Form einer Kulissenscheibe bzw. eines Nockenfolgers ausgebildet und weist mindestens eine Schrägfläche 24 zum Zusammenwirken mit dem mindestens einen Nocken 21 des Spannstücks 20 auf.

Bei der Verdrehung des Spannstücks 20 von seiner Passiv- in seine Aktivstellung werden das Spannstück 20 und das Gegenspannstück 22 weiter voneinander distanziert, d.h. der Abstand a zwischen ihren Basisabschnitten vergrößert sich, wie aus den Fig. 4 bis 6 ersichtlich. Somit wird mindestens eines dieser Teile 20, 22 in axialer Richtung der Drehachse 18 verschoben.

Das Öffnen und Schließen einer Spannvorrichtung 4 in dieser Weise mittels eines Spannstücks 20 und Gegenspannstücks 22 ist bekannt. Es könnte auch die umgekehrte Anordnung vorgesehen sein, d. h. das Gegenspannstück 22 weist mindestens einen Nocken auf und das Spannstück 20 ist als Kulissenscheibe bzw. Nockenfolger ausgebildet und besitzt mindestens eine Schrägfläche zum Zusammenwirken mit dem mindestens einen Nocken. Daneben sind auch andere Ausbildungen von Spannstücken 20, 22 zum Öffnen und Schließen der Spannvorrichtung 4 durch axiale Verschiebung mindestens eines dieser Teile bei der Verdrehung des Spannstücks 20 gegenüber dem Gegenspannstück 22 denkbar und möglich und auch bekannt. So könnten zwischen dem Spannstück 20 und dem Gegenspannstück 22 in bekannter Weise Kipphebel oder Wälzkörper angeordnet sein, die in Führungsbahnen laufen, von denen zumindest eine einen geneigten Boden aufweist. Wenn sich das Spannstück 20 in seiner Aktivstellung befindet, so ist eine weitere Verdrehung des Spannstücks 20 in die Schließdrehrichtung 19 blockiert. Im gezeigten Ausführungsbeispiel liegt hierzu der mindestens eine Nocken 21 an einem Anschlag 27 des Gegenspannstücks 22 an. Dieser Anschlag 27 wird von einer Stufe am Ende einer die Schrägfläche 24 umfassenden Führungsfläche für den Nocken 21 gebildet.

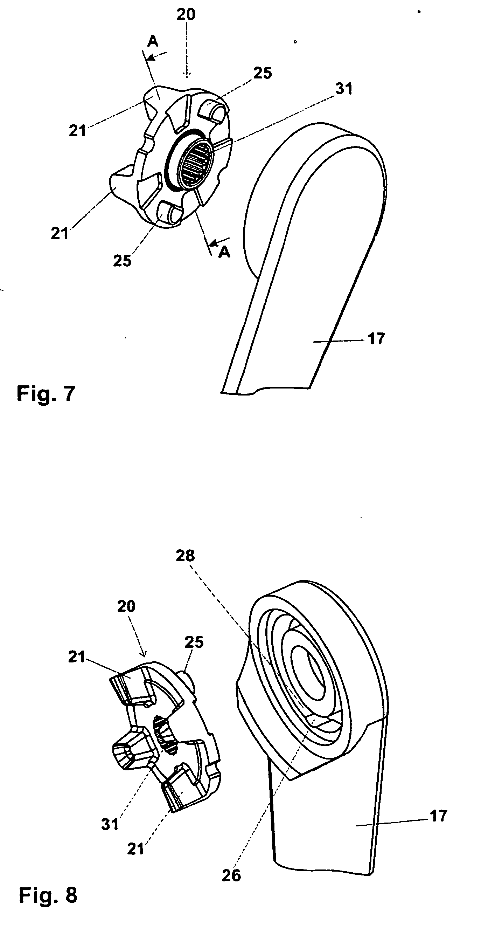

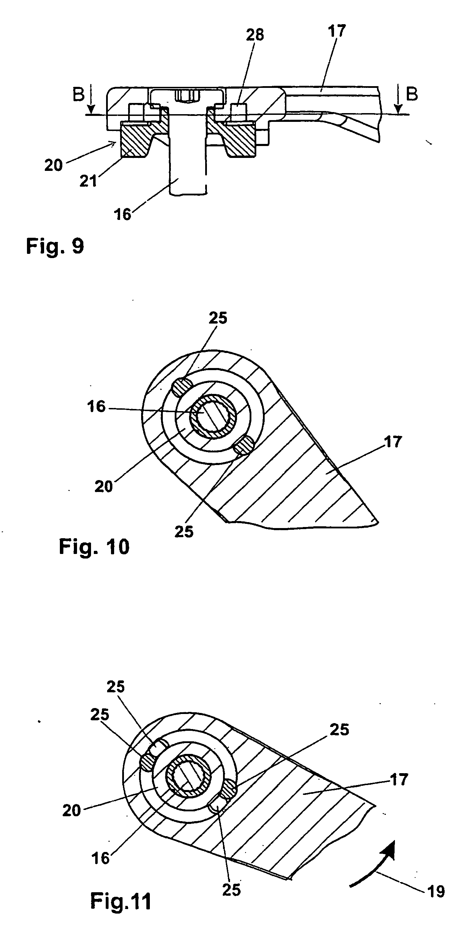

Im gezeigten Ausführungsbeispiel erfolgt eine zum Öffnen und Schließen der Spannvorrichtung 4 erforderliche Drehmitnahmeverbindung zwischen dem Betätigungshebel 17 und dem Spannstück 20 durch Verbindungsbolzen 25, die einstückig mit dem Spannstück 20 ausgebildet sind oder vom Spannstück 20 gehalten sind, beispielsweise indem sie in Ausnehmungen im Spannstück 20 eingepresst sind. Die Achsen der Verbindungsbolzen 25 liegen parallel zur Drehachse 18 und sind von dieser beabstandet. Beispielsweise sind zwei, insbesondere bezüglich der Drehachse 18 gegenüberliegende Verbindungsbolzen 25 vorhanden. Es können auch mehr oder weniger solcher Verbindungsbolzen 25 vorgesehen sein. Die Verbindungsbolzen 25 ragen in Ausnehmungen 26 des Betätigungshebels 17, in denen sie gegenüber dem Betätigungshebel 17 formschlüssig bezüglich einer Bewegung im Sinne einer Drehung um die Drehachse 18 gehalten sind, vgl. insbesondere Fig. 8 in Verbindung mit Fig. 10.

Wenn in der Schließstellung des Betätigungshebels 17 auf diesen eine Kraft einwirkt, die zu einem Drehmoment in die Schließdrehrichtung 19 führt, welches einen bestimmten Grenzwert überschreitet, so kommt es zu einem Abscheren der Verbindungsbolzen 25, wodurch die formschlüssige Verbindung zwischen dem Betätigungshebel 17 und dem Spannstück 20 bezüglich der Drehung um die Drehachse 18 aufgehoben wird und sich der Betätigungshebel 17 weiter in die Schließdrehrichtung 19 verschwenken kann. Dieser Zustand ist in Fig. 11 dargestellt. Die Spannvorrichtung 4 bleibt hierbei geschlossen, so dass die eingestellte Position der Lenksäule erhalten bleibt. Der Betätigungshebel 17 bleibt auch nach der Verdrehung gegenüber dem Spannstück 20 auf dem Spannbolzen 16 angeordnet, durch den Kopf des Spannbolzens 16 oder ein auf dem Spannbolzen 16 gehaltenes Teil.

Um ein Abscheren der Verbindungsbolzen 25 zu ermöglichen, bestehen diese insbesondere aus Kunststoff.

Auch die umgekehrte Ausbildung ist denkbar und möglich, bei der die Verbindungsbolzen 25 einstückig mit dem Betätigungshebel 17 ausgebildet sind oder vom Betätigungshebel 17 gehalten sind, beispielsweise indem sie in Ausnehmungen im Betätigungshebel 17 eingepresst sind, wobei sie in Ausnehmungen des Spannstücks 20 ragen, in denen sie gegenüber dem Spannstück 20 formschlüssig bezüglich einer Bewegung im Sinne einer Drehung um die Drehachse 18 gehalten sind.

Vorzugsweise ist das Spannstück 20 drehfest mit dem Spannbolzen 16 verbunden. Der Spannbolzen 16 dreht sich also bei der Drehung des Spannstücks 20 um die Drehachse 18 mit. Diese Verbindung kann beispielsweise über einen Rändel 31, 32 oder eine Rollierung erfolgen, welche am Spannstück 20 und/oder am Spannbolzen 16 angebracht ist. Auch andere kraftschlüssige, insbesondere reibschlüssige, und/oder formschlüssige und/oder stoffschlüssige Verbindungen sind denkbar und möglich. Grundsätzlich denkbar und möglich wäre auch eine einstückige Ausbildung des Spannbolzens 16 mit dem Spannstück 20.

Auch eine Ausbildung ist denkbar und möglich, bei der das Spannstück 20 gegenüber dem Spannbolzen 16 verdrehbar ist. Beim Öffnen und Schließen der Spannvorrichtung 4 kann der Spannbolzen ohne Drehung um seine Achse verbleiben.

Der Betätigungshebel kann sich, abgesehen von seiner Verbindung mit dem Spannstück 20, ungehindert auf dem Spannbolzen 16 um die Drehachse 18 drehen.

Die von der Spannvorrichtung 4 beim Öffnen und Schließen der Spannvorrichtung 4 verstellten Verzahnungen 8, 10 sind im gezeigten Ausführungsbeispiel am Gegenspannstück 22 oder einem hiermit verbundenen Teil angeordnet und wirken mit einer an der Seitenwange 12 angeordneten Verzahnung 9 und einer Verzahnung 14 eines mit der Stelleinheit 2 verbundenen Teils zusammen. Dieses Teil ist beispielsweise derart mit der Stelleinheit 2 verbunden, dass es bei einer in Längsrichtung 5 der Lenksäule auf die Stelleinheit 2 in einem Crashfall einwirkenden Kraft gegenüber der Stelleinheit 2 unter Energieabsorption verschiebbar ist. Auch andere Anordnungen von Verzahnungen oder anderen Feststellteilen sind denkbar und möglich und auch bekannt.

Im geschlossenen Zustand der Spannvorrichtung 4 miteinander in Eingriff gebrachte Feststellelemente wie Verzahnungen, können einseitig, d.h. auf einer Seite der Längsachse der Lenkspindel 3 (wie dargestellt), oder beidseitig vorgesehen sein.

Bekannt sind auch Ausbildungen, bei denen der Spannbolzen insgesamt auf einer Seite der Längsachse der Lenkspindel 3 liegt, wobei sein näher bei der Längsachse der Lenkspindel 3 liegendes Ende innerhalb des Mantelrohrs angeordnet ist. Auch eine solche Ausbildung ist denkbar und möglich.

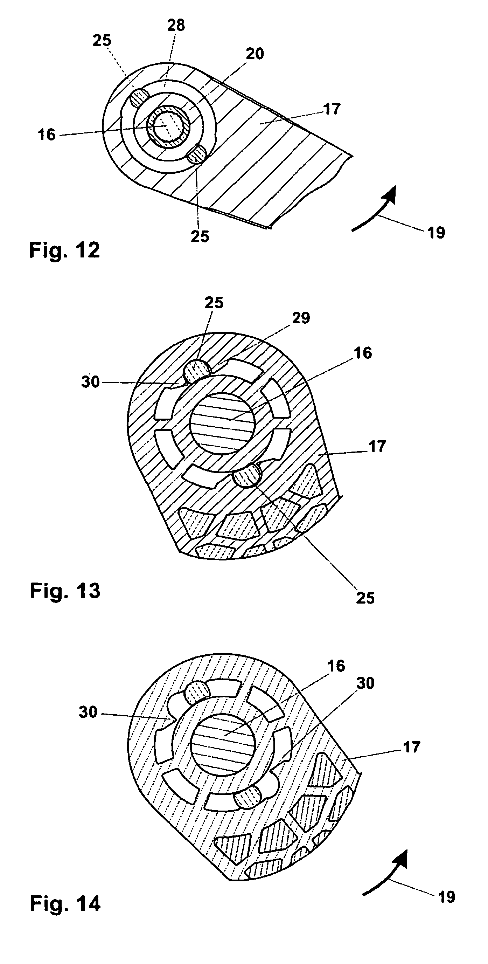

Ein zweites Ausführungsbeispiel der Erfindung, welches sich im Hinblick auf die Überwindung des Formschlusses zwischen dem Betätigungshebel 17 und dem Spannstück 20 im Crashfall unterscheidet, wird im Folgenden erläutert. Im Normalbetrieb, solange also der Grenzwert des zwischen dem Betätigungshebel 17 und dem Spannstück 20 wirkenden Drehmoments nicht überschritten worden ist, ist dieses Ausführungsbeispiel wie in den Fig. 1 bis 10 dargestellt und zuvor beschrieben, ausgebildet. Bei Überschreiten des Grenzwertes findet aber kein Abscheren der Verbindungsbolzen 25 statt, wie dies in Fig. 11 dargestellt ist, sondern der die Verdrehung des Betätigungshebels 17 gegenüber dem Spannstück 20 blockierende Formschluss wird vielmehr durch eine Materialumformung überwunden, wie dies in Fig. 12 dargestellt ist. Die Ausnehmungen 26, in welche die Verbindungsbolzen 25 im Normalbetrieb ragen und formschlüssig gehalten sind, stellen hier erweiterte Bereiche einer nutförmigen Führungsbahn 28 für den jeweiligen Verbindungsbolzen 25 dar.

Wenn in der Schließstellung des Betätigungshebels 17 auf diesen eine Kraft einwirkt, die zu einem Drehmoment in die Schließdrehrichtung 19 führt, welches einen bestimmten Grenzwert überschreitet, so wird der Betätigungshebel 17 gegenüber dem Spannstück 20 verdreht, wobei jeweils ein an die Ausnehmung 26 anschließender Abschnitt der Führungsbahn aufgeweitet wird. Die Verdrehung des Betätigungshebels 17 gegenüber dem Spannstück 20 erfolgt also ausgehend von der Ausgangsstellung unter ständiger Energieabsorption (im gezeigten Ausführungsbeispiel beträgt der Drehbereich, über welchen eine solche Energieabsorption stattfindet, theoretisch 180°; eine so große Verdrehung wird aber in der Praxis nicht vorkommen).

Vorzugsweise besteht der Betätigungshebel 17 zumindest im Bereich der Führungsbahn 28 oder auch insgesamt aus Kunststoff.

Eine weitere modifizierte Ausführungsform ist in den Fig. 13 und 14 dargestellt. Gegenüber dem anhand der Fig. 1 bis 11 beschriebenen ersten Ausführungsbeispiel und dem anhand der Fig. 12 beschriebenen zweiten Ausführungsbeispiel ist wiederum nur die Art der formschlüssigen Verbindung zwischen dem Betätigungshebel 17 und dem Spannstück 20 geändert. Beiderseits eines jeweiligen Verbindungsbolzens 25, der einstückig mit dem Spannstück 20 ausgebildet ist oder von diesem gehalten ist, beispielsweise indem er in eine Ausnehmung im Spannstück 20 eingepresst ist, sind hier Nasen 29, 30 vorgesehen, welche den Querschnitt der Führungsbahn 28 des Betätigungshebels 17 verringern und den Verbindungsbolzen 25 umgreifen. Wenn das zwischen dem Betätigungshebel 17 und Spannstück 20 in die Schließdrehrichtung 19 einwirkende Drehmoment den Grenzwert überschreitet, so werden die die Verdrehung des Betätigungshebels 17 blockierenden Nasen 29 derart verformt, dass sich der Betätigungshebel 17 weiter drehen kann. Nach der die Verdrehung des Betätigungshebels 17 ermöglichenden Verformung der Nasen 29 kann die weitere Verdrehung des Betätigungshebels 17, wobei sich die Verbindungsbolzen 25 in der jeweiligen Führungsbahn 28 verschieben, ohne oder mit einer geringeren Energieaufnahme erfolgen.

Bei den anhand der Fig. 12 bzw. 13 und 14 beschriebenen Ausführungsbeispielen ist wiederum auch die umgekehrte Ausbildung möglich, bei der die Verbindungsbolzen 25 einstückig mit dem Betätigungshebel 17 ausgebildet sind oder vom Betätigungshebel 17 gehalten sind, beispielsweise in dem sie in Ausnehmungen im Betätigungshebel 17 eingepresst sind. Die Ausnehmungen 26 und die Führungsbahn 28 bzw. die den Querschnitt der jeweiligen Führungsbahn 28 verringernden Nasen 29, 30 wären hier am Spannstück 20 vorgesehen.

Grundsätzlich, wenn auch weniger bevorzugt, kann die erfindungsgemäße Anordnung auch derart ausgebildet sein, dass sich im Crashfall beim Aufprall des Fahrers auf den Betätigungshebel dieser in die Richtung verdreht, in der das Spannsystem geöffnet wird. Und erst nachdem der Betätigungshebel sich bei dieser Drehung bis zu einem Anschlag weitergedreht hat, die drehfeste Verbindung mit dem Spannstück erfindungsgemäß aufgehoben wird. In diesem Fall kann die Lenksäule im Crashfall ohne weiteres vom Fahrer weggedrückt werden, da die Fixierung zwischen Stelleinheit 2 und Trageinheit 1 aufgehoben ist. Eine derartige Ausführung kann beispielsweise Einsatz finden, wenn andere Energieabsorptionsmechanismen, wie Zusatzairbags oder Dämpfer im die Lenksäule umgebenden Fahrzeugbereich vorgesehen sind.

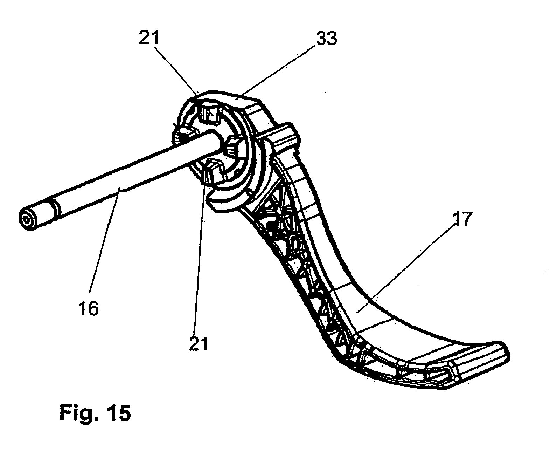

Eine weitere etwas modifizierte Ausführungsform ist in Fig. 15 dargestellt. Der Betätigungshebel 17 ist hier mit einer Abflachung 33 versehen, um in diesem Bereich eine Freigängigkeit gegenüber benachbarten Bauteilen zu erreichen.

In den zuvor beschriebenen Ausführungsbeispielen ist der Betätigungshebel jeweils mit einer Ausnehmung (vgl. z.B. Fig. 8) ausgebildet, die eine zentrale Achse aufweist, die mit der Drehachse 18 zusammenfällt, um die das Spannstück 20 vom Betätigungshebel beim Öffnen und Schließen der Spannvorrichtung gedreht wird. Wenn bei Überschreiten des Grenzwerts des zwischen dem Betätigungshebel und dem Spannstück wirkenden Drehmoments der Betätigungshebel gegenüber dem Spannstück verdreht wird, so fällt hierbei die zentrale Achse dieser Ausnehmung nach wie vor mit der Drehachse 18 zusammen. Äquivalent hierzu wäre eine Ausbildung, bei der der Betätigungshebel mit einem Zapfen oder Bolzen versehen wird, der eine zentrale Achse aufweist, die mit der Drehachse 18 zusammenfällt, um die das Spannstück vom Betätigungshebel beim Öffnen und Schließen der Spannvorrichtung gedreht wird, wobei diese zentrale Achse des Zapfens oder Bolzens nach wie vor mit der Drehachse zusammenfällt, wenn der Betätigungshebel bei Überschreiten des Grenzwerts des zwischen dem Betätigungshebel und dem Spannstück wirkenden Drehmoments gegenüber dem Spannstück um die Drehachse 18 verdreht wird. Auch eine Ausbildung in dieser letztgenannten Form ist denkbar und möglich.

### Legende

### zu den Hinweisziffern:

- 1: Trageinheit
- 2: Stelleinheit
- 3: Lenkspindel
- 4: Spannvorrichtung
- 5: Längsrichtung
- 6: Stellrichtung
- 8: Verzahnung
- 9: Verzahnung
- 10: Verzahnung
- 11: Verzahnung
- 12: Seitenwange
- 13: Seitenwange
- 14: Zwischeneinheit
- 15: Schwenkachse
- 16: Spannbolzen
- 17: Betätigungshebel
- 18: Drehachse
- 19: Schließdrehrichtung
- 20: Spannstück
- 21: Nocken
- 22: Gegenspannstück
- 23: Führungsleiste
- 24: Schrägfläche
- 25: Verbindungsbolzen
- 26: Ausnehmung
- 27: Anschlag
- 28: Führungsbahn
- 29: Nase
- 30: Nase
- 31: Rändel
- 32: Rändel
- 33: Abflachung

## Patentansprüche

1. Verstellbare Lenksäule für ein Kraftfahrzeug mit einer Spannvorrichtung (4), in deren geöffnetem Zustand die Lenksäule verstellbar ist und in deren geschlossenem Zustand die eingestellte Position der Lenksäule fixiert ist, wobei die Spannvorrichtung (4) einen Betätigungshebel (17) und ein Spannstück (20) umfasst, welches zum Öffnen und Schließen der Spannvorrichtung (4) vom Betätigungshebel (17) um eine Drehachse (18) drehbar ist, **dadurch gekennzeichnet, dass** der Betätigungshebel (17) bei Überschreiten eines Grenzwertes eines zwischen dem Betätigungshebel (17) und dem Spannstück (20) wirkenden Drehmoments gegenüber dem Spannstück (20) zumindest in eine Drehrichtung um die Drehachse (18) verdrehbar ist.

2. Verstellbare Lenksäule nach Anspruch 1, **dadurch gekennzeichnet, dass** die Drehachse (18), um die das Spannstück (20) und der Betätigungshebel (17) zum Öffnen und Schließen der Spannvorrichtung (4) drehbar sind, quer zur Längsrichtung (5) der Lenksäule ausgerichtet ist.

3. Verstellbare Lenksäule nach Anspruch 1 oder 2, **dadurch gekennzeichnet, dass** die Drehachse (18), um die das Spannstück (20) und der Betätigungshebel (17) zum Öffnen und Schließen der Spannvorrichtung drehbar sind, von einem Spannbolzen (16) der Spannvorrichtung (4) gebildet wird, auf dem das Spannstück (20) und der Betätigungshebel (17) angeordnet sind.

4. Verstellbare Lenksäule nach Anspruch 3, **dadurch gekennzeichnet, dass** bei einer Verdrehung des Betätigungshebels (17) gegenüber dem Spannstück (20) nach Überschreiten des Grenzwertes des zwischen dem Betätigungshebel (17) und dem Spannstück (20) wirkenden Drehmoments der Betätigungshebel (17) auf dem Spannbolzen (16) angeordnet bleibt.

5. Verstellbare Lenksäule nach einem der Ansprüche 1 bis 4, **dadurch gekennzeichnet, dass** zum Schließen der Spannvorrichtung (4) der Betätigungshebel (17) um die Drehachse (18) in eine Schließdrehrichtung (19) gedreht wird und das Spannstück (20) vom Betätigungshebel (17) in die Schließdrehrichtung (19) mitgenommen wird, wobei das Spannstück (20) im geschlossenen Zustand der Spannvorrichtung (4) gegen eine weitere Drehung in die Schließdrehrichtung (19) blockiert ist.

6. Verstellbare Lenksäule nach einem der Ansprüche 1 bis 5, **dadurch gekennzeichnet, dass** das Spannstück (20) mit einem Gegenspannstück (22) zusammenwirkt, das gegenüber der Drehachse (18) unverdrehbar gehalten ist, wobei das Spannstück (20) und/oder das Gegenspannstück (22) sich beim Öffnen und Schließen der Spannvorrichtung in axialer Richtung der Drehachse (18) verschiebt bzw. verschieben.

7. Verstellbare Lenksäule nach Anspruch 5 und Anspruch 6, **dadurch gekennzeichnet, dass** sich das Spannstück (20) im geschlossenen Zustand der Spannvorrichtung (4) an einem Anschlag (27) des Gegenspannstücks (22) gegen eine weitere Drehung in die Schließdrehrichtung (19) abstützt.

8. Verstellbare Lenksäule nach einem der Ansprüche 4 bis 7, **dadurch gekennzeichnet, dass** der Betätigungshebel (17) bei Überschreiten des Grenzwertes des zwischen dem Betätigungshebel (17) und dem Spannstück (20) wirkenden Drehmoments zumindest in die Schließdrehrichtung (19) gegenüber dem Spannstück (20) verdrehbar ist.

9. Verstellbare Lenksäule nach einem der Ansprüche 1 bis 8, **dadurch gekennzeichnet, dass** zwischen dem Betätigungshebel (17) und dem Spannstück (20) eine, zumindest in eine Drehrichtung, vorzugsweise in beide Drehrichtungen, wirkende formschlüssige Verbindung vorliegt, welche bei Überschreiten des Grenzwerts des zwischen dem Betätigungshebel (17) und dem Spannstück (20) wirkenden Drehmoments nachgibt.

10. Verstellbare Lenksäule nach Anspruch 9, **dadurch gekennzeichnet, dass** die formschlüssige Verbindung mittels mindestens einem parallel zur Drehachse (18) liegenden und von dieser beabstandeten Verbindungsbolzen (25) erfolgt.

11. Verstellbare Lenksäule nach Anspruch 10, **dadurch gekennzeichnet, dass** der Betätigungshebel (17) oder das Spannstück (20) mindestens eine kreisbogenförmige Führungsbahn (28) aufweist, entlang von der der mindestens eine Verbindungsbolzen (25) bei einer Verdrehung des Betätigungshebels (17) gegenüber dem Spannstück (20) unter Überwindung seiner formschlüssigen Halterung verfahrbar ist.

12. Verstellbare Lenksäule nach einem der Ansprüche 1 bis 11, **dadurch gekennzeichnet, dass** das Spannstück (20) mindestens einen Nocken (21) aufweist, der zum Öffnen und Schließen der Spannvorrichtung (4) mit einer Schrägfläche (24) des Gegenspannstücks (22) zusammenwirkt, oder das Gegenspannstück (22) mindestens einen Nocken aufweist, der zum Öffnen und Schließen der Spannvorrichtung (4) mit einer Schrägfläche des Spannstücks (20) zusammenwirkt.

13. Verstellbare Lenksäule nach einem der Ansprüche 1 bis 12, **dadurch gekennzeichnet, dass** das Spannstück drehfest mit dem Spannbolzen (16) verbunden ist.

## Claims

1. An adjustable steering column for a motor vehicle, having a clamping device (4) in the opened state of which the steering column is adjustable and in the closed state of which the adjusted position of the steering column is secured, wherein the clamping device (4) comprises an actuating lever (17) and a clamping piece (20), which is rotatable about an axis of rotation (18) by the actuating lever (17) in order to open and close the clamping device (4), **characterised in that** the actuating lever (17) is rotatable in at least one rotational direction about the axis of rotation (18) with respect to the clamping piece (20) when a threshold value of a torque acting between the actuating lever (17) and the clamping piece (20) is exceeded.

2. An adjustable steering column according to claim 1, **characterised in that** the axis of rotation (18), about which the clamping piece (20) and the actuating lever (17) are rotatable to open and close the clamping device (4), is directed transversely to the longitudinal direction (5) of the steering column.

3. An adjustable steering column according to claim 1 or 2, **characterised in that** the axis of rotation (18), about which the clamping piece (20) and the actuating lever (17) are rotatable to open and close the clamping device, is formed by a clamping bolt (16) of the clamping device (4), on which bolt (16) there are arranged the clamping piece (20) and the actuating lever (17).

4. An adjustable steering column according to claim 3, **characterised in that** the actuating lever (17) remains arranged on the clamping bolt (16) upon rotation of the actuating lever (17) with respect to the clamping piece (20) after the threshold value of the torque acting between the actuating lever (17) and the clamping piece (20) has been exceeded.

5. An adjustable steering column according to any one of claims 1 to 4, **characterised in that** for closing of the clamping device (4), the actuating lever (17) is rotated about the axis of rotation (18) in a closing rotational direction (19) and the clamping piece (20) is entrained in the closing rotational direction (19) by the actuating lever (17), wherein in the closed state of the clamping device (4), the clamping piece (20) is blocked against further rotation in the closing rotational direction (19).

6. An adjustable steering column according to any one of claims 1 to 5, **characterised in that** the clamping piece (20) cooperates with a counter clamping piece (22) held so as to be non-rotatable with respect to the axis of rotation (18), wherein the clamping piece (20) and/or the counter clamping piece (22) moves/move in the axial direction of the axis of rotation (18) upon opening and closing of the clamping device.

7. An adjustable steering column according to claim 5 and claim 6, **characterised in that** the clamping piece (20) is in the closed state of the clamping device (4) supported against a stop (27) of the counter clamping piece (22) so as to prevent further rotation in the closing rotational direction (19).

8. An adjustable steering column according to any one of claims 4 to 7, **characterised in that** the actuating lever (17) is rotatable in at least the closing rotational direction (19) with respect to the clamping piece (20) when the threshold value of the torque acting between the actuating lever (17) and the clamping piece (20) is exceeded.

9. An adjustable steering column according to any one of claims 1 to 8, **characterised in that** between the actuating lever (17) and the clamping piece (20) there is a positive-locking connection acting in at least one rotational direction, preferably in both rotational directions, which connection yields when the threshold value of the torque acting between the actuating lever (17) and the clamping piece (20) is exceeded.

10. An adjustable steering column according to claim 9, **characterised in that** the positive-locking connection takes place by means of at least one connecting bolt (25) lying parallel to the axis of rotation (18) and at a distance therefrom.

11. An adjustable steering column according to claim 10, **characterised in that** the actuating lever (17) or the clamping piece (20) has at least one arcuate guideway (28) along which the at least one connecting bolt (25) can be moved, accompanied by release of the positive-locking holding thereof, upon rotation of the actuating lever (17) with respect to the clamping piece (20).

12. An adjustable steering column according to any one of claims 1 to 11, **characterised in that** the clamping piece (20) has at least one cam (21) cooperating with an inclined surface (24) of the counter clamping piece (22) in order to open and close the clamping device (4), or the counter clamping piece (22) has at least one cam cooperating with an inclined surface of the clamping piece (20) in order to open and close the clamping device (4).

13. An adjustable steering column according to any one of claims 1 to 12, **characterised in that** the clamping piece is connected to the clamping bolt (16) in a rotationally-fixed manner

## Revendications

1. Colonne de direction réglable de véhicule automobile équipée d'un dispositif de serrage (4) qui, en position ouverte, permet de régler la colonne de direction et qui, en position fermée, bloque la position réglée de la colonne de direction,
* le dispositif de serrage (4) comportant un levier d'actionnement (17) et une pièce de serrage (20) qui, pour ouvrir et fermer le dispositif de serrage (4) est tournée par le levier d'actionnement (17) autour d'un axe de rotation (18),
colonne de direction **caractérisée en ce que**
- le levier d'actionnement (17) en cas de dépassement d'une valeur limite du couple agissant entre le levier d'actionnement (17) et la pièce de serrage (20), peut être tourné par rapport à la pièce de serrage (20) au moins dans un sens de rotation autour de l'axe de rotation (18).

2. Colonne de direction réglable selon la revendication 1,
**caractérisée en ce que**
l'axe de rotation (18) autour duquel tournent la pièce de serrage (20) et le levier d'actionnement (17) pour ouvrir et fermer le dispositif de serrage (4), est dirigé transversalement à la direction longitudinale (5) de la colonne de direction.

3. Colonne de direction réglable selon la revendication 1 ou 2,
**caractérisée en ce que**
l'axe de rotation (18) autour duquel tournent la pièce de serrage (20) et le levier d'actionnement (17) pour ouvrir et fermer le dispositif de serrage, est constitué par un goujon de serrage (16) du dispositif de serrage (4) portant la pièce de serrage (20) et le levier d'actionnement (17).

4. Colonne de direction réglable selon la revendication 3,
**caractérisée en ce qu'**
en tournant le levier d'actionnement (17) par rapport à la pièce de serrage (20) après avoir dépassé la valeur limite du couple entre le levier d'actionnement (17) et la pièce de serrage (20), le levier d'actionnement (17) reste sur le goujon de serrage (16).

5. Colonne de direction réglable selon l'une des revendications 1 à 4,
**caractérisée en ce que**
pour fermer le dispositif de serrage (4), on fait tourner le levier d'actionnement (17) autour de l'axe de rotation (18) dans un sens de rotation de fermeture (19), et la pièce de serrage (20) est entraînée par le levier d'actionnement (17) dans le sens de rotation de fermeture (19),
* la pièce de serrage (20) à l'état fermé du dispositif de serrage (4) étant bloquée dans le sens de rotation de fermeture (19) contre toute autre rotation dans ce sens.

6. Colonne de direction réglable selon l'une des revendications 1 à 5,
**caractérisée en ce que**
la pièce de serrage (20) coopère avec une pièce de serrage complémentaire (22) qui reste fixe par rapport à l'axe de rotation (18),
* la pièce de serrage (20) et/ou la pièce de contre-serrage (22) coulissantes, pouvant coulisser dans la direction axiale de l'axe de rotation (18) lors de l'ouverture et de la fermeture du dispositif de serrage.

7. Colonne de direction réglable selon les revendications 5 et 6,
**caractérisée en ce qu'**
à l'état fermé du dispositif de serrage (4), la pièce de serrage (20) s'appuie contre une butée (27) de la pièce de serrage complémentaire (22) contre toute poursuite de rotation dans le sens de rotation de fermeture (19).

8. Colonne de direction réglable selon l'une des revendications 4 à 7,
**caractérisée en ce qu'**
en cas de dépassement de la valeur limite du couple agissant entre le levier d'actionnement (17) et la pièce de serrage (20), le levier d'actionnement (17) peut au moins tourner dans le sens de rotation de fermeture (19) par rapport à la pièce de serrage (20).

9. Colonne de direction réglable selon l'une des revendications 1 à 8,
**caractérisée par**
une liaison par la forme agissant dans un sens de rotation, de préférence dans les deux sens de rotation entre le levier d'actionnement (17) et la pièce de serrage (20), et qui cède en cas de dépassement de la valeur limite du couple agissant entre le levier d'actionnement (17) et la pièce de serrage (20).

10. Colonne de direction réglable selon la revendication 9,
**caractérisée en ce que**
la liaison par la forme est réalisée par au moins un goujon de liaison (25) parallèle à l'axe de rotation (18) et à distance de celui-ci.

11. Colonne de direction réglable selon la revendication 10,
**caractérisée en ce que**
le levier d'actionnement (17) ou la pièce de serrage (20) présente au moins un chemin de guidage (28) en forme d'arc de cercle, le long duquel au moins un goujon de liaison (25) peut tourner lors de la rotation du levier d'actionnement (17) par rapport à la pièce de serrage (20) en dépassant sa fixation par une liaison par la forme.

12. Colonne de direction réglable selon l'une des revendications 1 à 11,
**caractérisée en ce que**
la pièce de serrage (20) comporte au moins une came (21) coopérant avec une surface inclinée (24) de la pièce de serrage complémentaire (22) pour ouvrir et pour fermer le dispositif de serrage (4) ou encore la pièce de serrage complémentaire (22) comporte au moins une came coopérant avec une surface inclinée de la pièce de serrage (20) pour ouvrir et pour fermer le dispositif de serrage (4).

13. Colonne de direction réglable selon l'une des revendications 1 à 12,
**caractérisée en ce que**
la pièce de serrage est reliée solidairement en rotation au goujon de serrage (16).
